# EUROPEAN PATENT SPECIFICATION

(11) **EP 0 765 188 B1**
(45) Date of publication and mention of the grant of the patent: **18.11.1998**
(21) Application number: 95923430.3
(22) Date of filing: 19.06.1995
(51) Int. Cl.: B01D 53/86, B01D 53/94, B01J 23/68, B01J 23/89

(54) **OXIDATION CATALYST**
OXIDATIONSKATALYSATOR
CATALYSEUR D'OXYDATION

(30) Priority: 17.06.1994 ZA 9404328; 17.08.1994 ZA 9406206
(43) Date of publication of application: 02.04.1997
(73) Proprietor: Anglo American Research Laboratories (Proprietary) Limited, Johannesburg (ZA)
(72) Inventor: Grigorova, Bojidara, Standton (ZA); Palazov, Atanas, Johannesburg (ZA); Mellor, John, Johannesburg (ZA); Tumilty, James Anthony Jude, Sandton (ZA); Gafin, Anthony Harold, Johannesburg (ZA)
(74) Representative: Towler, Philip Dean
(86) International application number: GB9501427
(87) International publication number: WO9535151

(56) References cited:
- EP-A- 0 351 057
- EP-A- 0 395 856
- EP-A- 0 461 452
- WO-A-94/19092
- WO-A-95/19843
- DE-A- 2 739 611
- FR-A- 2 439 052
- US-A- 4 839 327

## Description

### BACKGROUND OF THE INVENTION

This invention relates to a catalyst.

International Patent Application No. PCT/GB 94/00321, which represents prior art under Art 54(3)EPC, for all states presently designated, discloses a catalyst for use in the oxidation of carbon monoxide and hydrocarbons which comprises a porous alumina support having captured thereon a complex comprising gold, a transition metal selected from cobalt and manganese, and the alumina, the concentration of gold on the support being less than 2 percent by mass of the catalyst, and the atomic ratio of gold to transition metal being in the range 1:30 to 1:200. Of these catalysts, the preferred catalyst is one which has cobalt as the transition metal. The alumina is said to have a large surface area, typically 80 to 400m²/g.

Reference is made to US-A-4 839 327. Example 10 of this document teaches a catalyst comprising ultra-fine gold particles on the surface of a Co₂MuOx/γAl₂O₃ composite.

### SUMMARY OF THE INVENTION

According to the present invention, a catalyst for use in an oxidation reaction comprises a porous alumina support in the form of a powder having captured thereon a complex comprising gold, a transition metal selected from cobalt and manganese, and alumina, the concentration of gold on the support being less than 2 percent by mass of the catalyst, and the atomic ratio of gold to transition metal being in the range 1:10 to 1:200.

### BRIEF DESCRIPTION OF THE DRAWINGS

Figure 1(a) illustrates graphically the effect of pH on the percentage of gold captured on pellets, which embodiment does not form part of the invention,
Figure 1(b) illustrates graphically the effect of pH on the percentage conversion of carbon monoxide and hydrocarbon using a catalyst of the invention,
Figures 2(a) and 2(b) illustrate X-ray diffraction traces of catalysts of the invention, and
Figure 3(a) to 3(c) illustrate temperature programmed reduction traces produced using catalysts of the invention.

### DESCRIPTION OF EMBODIMENTS

When the porous alumina support is alumina powder, such powder preferably has a particle size of less than 100 microns, and typically 70 percent less than 60 microns and 85 percent less than 90 microns. Such powder has a high surface area, for example 185m²/g.

The catalyst has a low gold concentration, i.e. less than 2 percent by mass of the catalyst. Indeed, effective catalytic activity has been achieved with a gold concentration as low as 0,1 percent by mass of the catalyst. Preferably, the gold concentration is of the order of 0,1 to 0,5 percent by mass of the catalyst. Concentrations of gold higher than 2 percent by mass of the catalyst lead to expensive catalysts of lesser stability.

The atomic ratio of gold to transition metal is in the range 1:10 to 1:200, preferably in the range 1:30 to 1:80. A particularly suitable atomic ratio of gold to transition metal is of the order of 1:60.

The gold and transition metal may be captured on the alumina support by impregnating the support with solutions of the metals. The solutions will generally have acidic pH and such as to avoid any precipitation or co-precipitation of the metals before impregnation. Higher pH's can also be tolerated. In this regard, it has been found that gold impregnation using gold solutions of pH of at least 6,0 and preferably in the range 6,0 to 8,5 produces effective catalysts.

The solvent of the solution or solutions `will preferably be water, but organic solvents such as alcohols and ethers and mixtures of organic solvents with water, may also be used.

The impregnation of the porous alumina support may take place simultaneously or sequentially. It is preferred that the metals are captured on the support sequentially.

In one method of capturing the metals on the porous support, the support is impregnated with a solution of gold or transition metal, dried, impregnated with a solution of the other metal, dried, and heat treated in an oxidising atmosphere to a temperature exceeding 300°C.

In a preferred method, the porous support is impregnated with a solution of the transition metal, dried, the dried product exposed to a reducing atmosphere such as hydrogen or carbon monoxide at a temperature exceeding 300°C, typically 500°C, and thereafter optionally exposed to an oxidising atmosphere, the thus treated product impregnated with a solution of gold, dried, and the dried product heat treated in an oxidising atmosphere exceeding 300°C.

In the above methods, heat treatment of the impregnated product in an oxidising atmosphere has the effect of activating the catalyst. The oxidising atmosphere will typically be air or oxygen mixed with another gas and is preferably pure or substantially pure oxygen. The temperature of the heat treatment will typically be in the range 300 to 700°C and preferably in the range 400 to 600°C. A temperature of 500°C has been found particularly suitable for the heat treatment.

The heat treatment in oxidising atmosphere at a temperature exceeding 300°C may be preceded by heat treatment in the presence of carbon monoxide or other reductant at the same or similar temperature.

The gold solution will typically be a tetrachloroauric acid or ammonium tetrachloroaurate solution. The concentration of the gold compound in the solution will generally not exceed 4 to 5 molar.

The transition metal solution will typically be a nitrate solution. Although solutions of chlorides and sulphates may be used, they may poison the catalyst. The concentration of the transition metal compound in the solution will generally not exceed 4 to 5 molar.

The catalysts of the invention have been found to be effective in the oxidation of carbon monoxide and hydrocarbons. They have application in the exhaust systems of motor vehicles, gas safety masks, the purification of air in mines and underground operations, the purification of various industrial effluents and the recycling of carbon dioxide in lasers. The catalysts may also be used in fuel cells.

The following examples illustrate methods of making the catalysts of the invention.

### EXAMPLE 1

Powdered alumina having a particle size 85 percent less than 90 microns (1-4g) was accurately weighed and dried in an oven at 120°C for a minimum of 2 hours. The dry material was impregnated with a cobalt nitrate solution in vacuo.

The cobalt impregnated alumina support material was dried for a minimum of 24 hours at 120°C, causing some decomposition of the nitrate. Following drying, the material was heated at 500°C under flowing hydrogen (30ml/min) and held at this temperature for 20 minutes. Following this, the material was allowed to cool in flowing hydrogen to room temperature. The material was thereafter treated with oxygen or other oxidising atmosphere at a temperature of less than 40°C, i.e. 25°C to 35°C, for a period of 20 to 30 minutes.

The thus treated product was impregnated with tetrachloroauric acid solution (0,077 mol ℓ⁻¹ pH1,3). The impregnated product was dried in air at 120°C for about 12 hours.

The impregnated support material was activated by heating it in a 30ml/minute flow of pure oxygen to a temperature of 500°C. This temperature was maintained for a period of 20 minutes.

### EXAMPLE 2

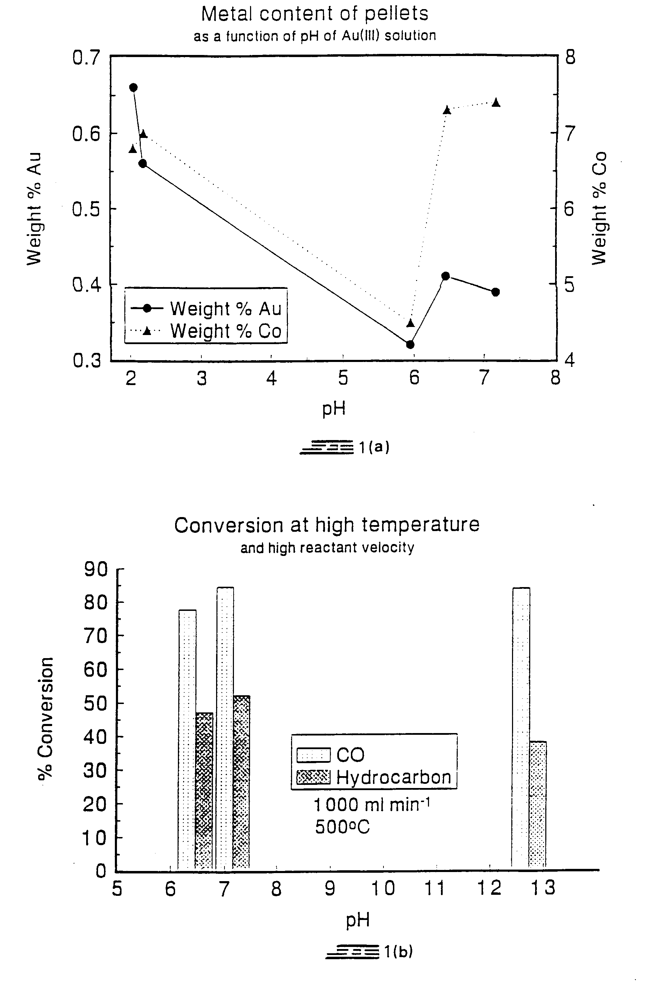

The effect of the pH of the gold solution on the amount of gold captured on the support and the efficacy of the resulting catalyst was studied. The method of Example 1 was followed, save that the pH of the gold solution was varied. It was found that using a pH in the range of 6,8 to 7,5 the amount of gold which impregnated the support was relatively low, leading to a lower cost of catalyst, yet the ability of the catalyst to oxide the carbon monoxide and hydrocarbons remained excellent. This is shown graphically in the attached Figures 1(a) and 1(b), respectively.

### EXAMPLE 3

The transition metal, particularly cobalt, in the catalyst of the invention, is oxidised, a spinel is formed between the transition metal and the alumina; and the gold atoms or particles are in intimate contact with, and believed to be chemically associated with, the spinel and the oxidised cobalt.

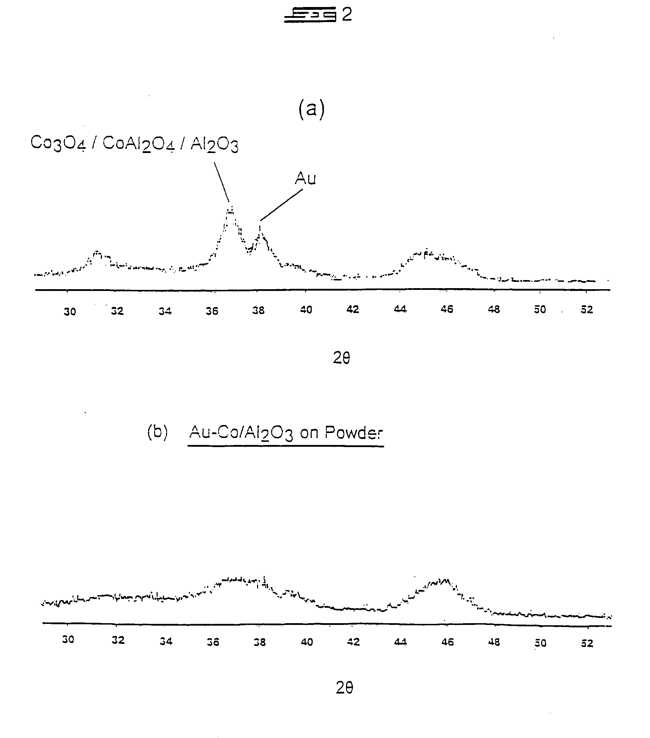

Attached as Figure 2 are X-ray diffraction traces for catalysts comprising Au-Co/Al₂O₃ wherein the Al₂O₃ is either in pellet or powder form, whereby said pellet form does not form part of the invention. X-ray diffraction is a technique which is used to determine the presence of a crystalline form of a material. The absence of a peak indicates that the product is amorphous. Referring to Figure 2(a), it will be noted that two crystalline peaks were observed in respect of the catalyst in pellet form. The one peak corresponds to the crystalline complex, Co₃O₄/CoAl₂O₄/Al₂O₃, and the other peak to gold. This indicates that in respect of pellets, not all the gold is in chemically combined form. In contrast, no such crystalline peaks were observed for the same catalyst in powder form, as can be seen from Figure 2(b). From this figure, it can be concluded that substantially all the gold is in chemically combined form, incorporated into the Co₃O₄ and/or CoAl₂O₄ and thus distorting the spinel structure.

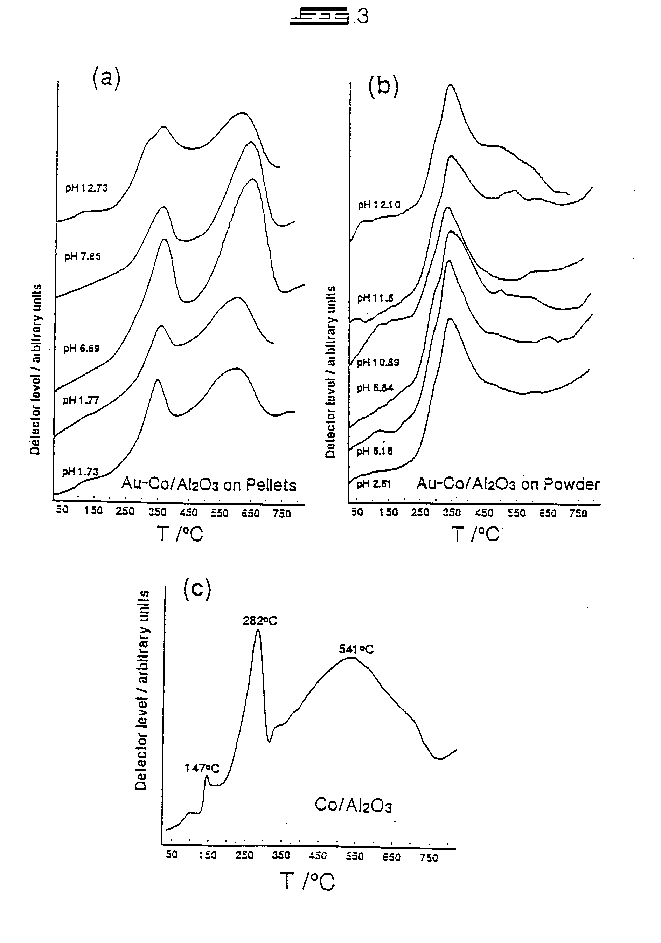

Temperature programmed reduction traces were produced using both the pellet and powder forms of the same catalyst. Such traces are produced by oxidising the catalyst at 500°C and thereafter exposing it to a hydrogen reducing atmosphere over a range of temperatures. A peak in the trace indicates the presence of a reducible phase in the catalyst. The traces for the catalysts and a reference product can be seen as Figures 3(a) to 3(c).

Figure 3(c) illustrates such a trace on a cobalt/alumina complex, a reference product. The peaks at 147°C and 282°C are cobalt oxide peaks, whilst the peak at 541°C is probably a distorted spinel peak.

The traces produced on the catalysts in pellet and powder forms are illustrated by Figures 3(a) and 3(b), respectively. The peak at about 340°C demonstrates the existence of a complex, gold/cobalt/Al₂O₃. It will be noted that for the pellets, both gold/cobalt and the spinel peaks were observed. In contrast, only a gold/cobalt peak was observed for the powder.

## Claims

1. A catalyst for use in an oxidation reaction comprising a porous alumina support in the form of powder having captured thereon a complex comprising gold, a transition metal selected from cobalt and manganese, and alumina, the concentration of gold on the support being less than 2 percent by mass of the catalyst, and the atomic ratio of gold to transition metal being in the range 1:10 to 1:200.

2. A catalyst according to claim 1 wherein the porous alumina support is in the form of powder having a particle size of less than 100 microns.

3. A catalyst according to claim 1 or claim 2 wherein the porous alumina support is in the form of powder, 70 percent being less than 60 microns.

4. A catalyst according to any one of the preceding claims wherein the porous alumina support is in the form of powder, 85 percent being less than 90 microns.

## Patentansprüche

1. Katalysator zur Verwendung bei einer Oxidationsreaktion, umfassend einen porösen Aluminiumoxid-Träger in Form eines Pulvers mit einen darauf fixierten Komplex, umfassend Gold, ein Übergangsmetall, ausgewählt aus Cobalt und Mangan, und Aluminiumoxid, wobei die Gold-Konzentration auf dem Träger weniger als 2 Massenprozent des Katalysators beträgt und das Atomverhältnis von Gold zu Übergangsmetall im Bereich von 1:10 bis 1:200 liegt.

2. Katalysator nach Anspruch 1, wobei der poröse Aluminiumoxid-Träger in Form eines Pulvers mit einer Teilchengröße von weniger als 100 µm ist.

3. Katalysator nach Anspruch 1 oder 2, wobei der poröse Aluminiumoxid-Träger in Form eines Pulvers ist, wovon 70% weniger als 60 µm aufweisen.

4. Katalysator nach irgendeinem der vorstehenden Ansprüche, wobei der poröse Aluminiumoxid-Träger in Form einen Pulvers ist, wovon 85% weniger als 90 µm aufweisen.

## Revendications

1. Catalyseur destiné à être utilisé dans une réaction d'oxydation comprenant un support d'alumine poreux sous forme de poudre sur lequel est fixé un complexe comprenant de l'or, un métal de transition choisi parmi le cobalt et le manganèse, et de l'alumine, la concentration de l'or sur le support étant inférieure a 2 % en masse du catalyseur, et le rapport atomique de l'or au métal de transition étant dans le domaine de 1 :10 à 1 :200.

2. Catalyseur selon la revendication 1 dans lequel le support d'alumine poreux est sous forme d'une poudre ayant une taille de particules inférieure à 100 microns.

3. Catalyseur selon la revendication 1 ou 2 dans lequel le support d'alumine poreux est sous forme d'une poudre dont 70 % est inférieure à 60 microns.

4. Catalyseur selon l'une quelconque des revendications précédentes dans lequel le support d'alumine poreux est sous forme d'une poudre dont 85 % est inférieure à 90 microns.
